(19) **Europäisches Patentamt**
**European Patent Office**
**Office européen des brevets**

(11) **EP 3 586 095 B1**

(12) **EUROPEAN PATENT SPECIFICATION**

(45) Date of publication and mention of the grant of the patent:
**23.04.2025 Bulletin 2025/17**

(21) Application number: **18707531.2**

(22) Date of filing: **13.02.2018**

(51) International Patent Classification (IPC):
**G01K 1/143** *(2021.01)* **G01K 7/42** *(2006.01)*

(52) Cooperative Patent Classification (CPC):
**G01K 7/42; G01K 1/143**

(86) International application number:
**PCT/US2018/017937**

(87) International publication number:
**WO 2018/156383 (30.08.2018 Gazette 2018/35)**

(54) **RESPONSE TIME COMPENSATION FOR INDUSTRIAL PROCESS TEMPERATURE TRANSMITTER**

ANSPRECHZEITKOMPENSATION FÜR EINEN TEMPERATURTRANSMITTER FÜR INDUSTRIELLE VERFAHREN

COMPENSATION DU TEMPS DE RÉPONSE POUR UN TRANSMETTEUR DE TEMPÉRATURE DE PROCESSUS INDUSTRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2017 US 201715437731**

(43) Date of publication of application:
**01.01.2020 Bulletin 2020/01**

(73) Proprietor: **Rosemount Inc.**
**Shakopee, MN 55379 (US)**

(72) Inventors:
• **RUD, Jason Harold**
**Mayer, MN 55360 (US)**
• **TRIMBLE, Steve Richard**
**Prior Lake, MN 55372 (US)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**DE-A1- 102007 055 029 US-A1- 2016 178 446**

**Description**

FIELD

Embodiments of the present disclosure relate to industrial process temperature transmitters and, more specifically, to compensating temperature measurements performed by the temperature transmitter for a response time of the temperature measurement.

BACKGROUND

Industrial processes are used in the manufacturing and transport of many types of materials. In such systems, it is often required to measure different parameters within the process. One such parameter is a temperature of the process medium.

Industrial process temperature transmitters typically measure the temperature of the process medium using a temperature sensor and communicate the measured temperature to a desired location, such as a control room. Such temperature transmitters typically isolate the temperature sensor from the process medium to protect the temperature sensor and associated electronics from process conditions that may damage the sensor, and/or adversely affect the temperature measurement.

Some temperature transmitters house the temperature sensor within a thermowell. The temperature sensor is installed in the thermowell through an open end. A sealed end of the thermowell is inserted into the process medium. This allows the temperature sensor to measure the temperature of the process medium through the thermowell without being directly exposed to the process medium. Thus, the temperature sensor may be inserted into the process medium while providing protection from harsh conditions that could damage the sensor.

Other temperature transmitters measure the temperature of the process medium while avoiding any intrusion on the process. Such non-intrusive temperature transmitters typically position a temperature sensor in contact with the exterior surface of a process vessel wall containing the process medium, such as the exterior surface of a pipe containing the process medium. The temperature sensor measures the temperature of the process medium through the process vessel wall.

Temperature transmitters experience a delay in the detection of a change in the temperature of the process medium that is caused, at least in part, to the need to communicate the temperature through the wall of the thermowell or the wall of the process vessel. For some applications, such as those where temperature measurement timing is critical for process management, such a delay in the temperature measurement may be unacceptable.

A known process temperature transmitter and a method for measuring a temperature of a process medium (DE 10 2007 055 029 A1) comprises a temperature sensor. The measured temperature values are stored in a memory and are evaluated by forming average values. Gradients of a process of the sensor signals are determined by forming a difference of two of the values or of two average values and by multiplication of the difference with a correction factor. The multiplication result is added to the currently stored measurement value to obtain a corrected measurement value. Another known process temperature transmitter and method for measuring a temperature of a process medium (US 2016/0178446 A1) comprises a measuring device for determining the temperature of a medium in a tube. A temperature sensor is arranged on the outside of the tube wall, measuring the process temperature. The device connects differentiators, capable of determining derivatives of the progression over time of the temperature registered by the temperature sensor with multipliers. The multipliers multiply the derivatives by factors which are values for the time constant of the heat transfer through the tube wall. An adder is contained at the output of the multipliers and output corrected temperature values. In order to obtain the factors for the multipliers, a separate measurement setup is used. Therefore, a test piece of the tube is placed in a test tank in which there is a medium. The interior of the tube does not contain the medium. In this empty interior, the temperature sensor is coupled to the inside of the wall of the tube. In order to monitor the actual temperature of the medium, an extra temperature-dependent resistor is arranged within the medium and outside the tube, close to the wall, as an additional reference temperature sensor.

SUMMARY OF THE INVENTION

Embodiments of the present disclosure relate to industrial process temperature transmitters for measuring a temperature of a process medium according to claim 1, and methods for measuring a temperature of a process medium using an industrial process temperature transmitter according to claim 10.

BRIEF DESCRIPTION OF THE DRAWINGS

FIG. 1 is a simplified block diagram of an industrial process temperature transmitter, in accordance with one or more embodiments of the present disclosure, interacting with a process.

FIG. 2 is a simplified block diagram illustrating exemplary signal processing performed by a compensation circuit of an industrial process temperature transmitter, in accordance with embodiments of the present disclosure.

FIG. 3 is a simplified diagram showing an exemplary industrial process control system including a temperature transmitter configured to sense a temperature of a process medium, in accordance with embodiments of the present disclosure.

FIG. 4 is simplified cross-sectional view of a portion of a temperature sensing unit within a thermowell of a temperature transmitter, in accordance with exemplary embodiments of the present disclosure.

FIG. 5 is a simplified diagrammatic view of a temperature sensing unit of an exemplary nonintrusive temperature transmitter that is located externally to a process vessel, in accordance with exemplary embodiments of the present disclosure.

FIG. 6 is a graph illustrating an exemplary correction that should be applied to a temperature measurement in relation to the measurement rate of change for a stepped input, in accordance with embodiments of the present disclosure.

## DETAILED DESCRIPTION OF ILLUSTRATIVE EMBODIMENTS

Embodiments of the present disclosure are described more fully hereinafter with reference to the accompanying drawings. Elements that are identified using the same or similar reference characters refer to the same or similar elements.

Specific details are given in the following description to provide a thorough understanding of the embodiments. However, it is understood by those of ordinary skill in the art that the embodiments may be practiced without these specific details. For example, circuits, systems, networks, processes, frames, supports, connectors, motors, processors, and other components may not be shown, or shown in block diagram form in order to not obscure the embodiments in unnecessary detail.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element is referred to as being "connected," "coupled," or "attached" to another element, it can be directly connected, coupled or attached to the other element, or it can be indirectly connected, coupled, or attached to the other element where intervening or intermediate elements may be present. In contrast, if an element is referred to as being "directly connected," "directly coupled" or "directly attached" to another element, there are no intervening elements present. Drawings illustrating direct connections, couplings, or attachments between elements also include embodiments, in which the elements are indirectly connected, coupled, or attached to each other.

It will be understood that, although the terms first, second, etc. may be used herein to describe various elements, these elements should not be limited by these terms. These terms are only used to distinguish one element from another. Thus, a first element could be termed a second element without departing from the teachings of the present disclosure.

Unless otherwise defined, all terms (including technical and scientific terms) used herein have the same meaning as commonly understood by one of ordinary skill in the art relating to the present disclosure. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Embodiments of the present disclosure may also be described using flowchart illustrations and block diagrams. Although a flowchart may describe the operations as a sequential process, many of the operations can be performed in parallel or concurrently. In addition, the order of the operations may be re-arranged. A process is terminated when its operations are completed, but could have additional steps not included in a figure or described herein.

Embodiments of the present disclosure are directed to compensating industrial temperature transmitter temperature measurements to improve the response time of the temperature measurements. This is generally accomplished by compensating a temperature signal produced by a temperature sensor that is a function of the temperature of a process medium for delays in the temperature measurements relating to the separation of the temperature sensor from the process medium by an isolation wall, and other factors. The improved response time of the temperature transmitter can improve the efficiency of the process, and allows the temperature transmitter to preferably be used in processes where high speed temperature measurements are desired.

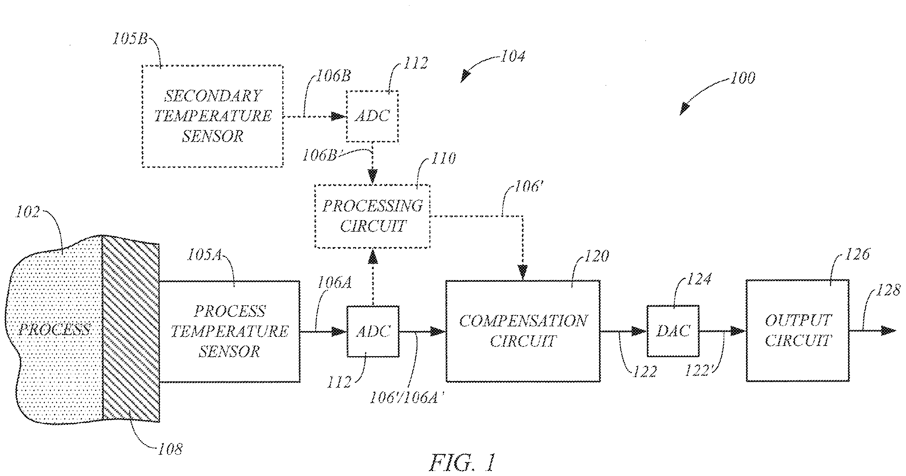

FIG. 1 is a simplified block diagram of an industrial temperature transmitter, generally referred to as 100, formed in accordance with one or more embodiments of the present disclosure, interacting with a process medium 102. In some embodiments, the process medium 102 includes an industrial process that involves a material, such as a fluid, moving through pipes and tanks to transform less valuable materials into more valuable and useful products, such as petroleum, chemicals, paper, food, etc. For example, an oil refinery performs industrial processes that can process crude oil into gasoline, fuel oil, and other petrochemicals. Industrial process control systems use process devices, such as process transmitters, as measurement instruments for sensing and measuring process parameters, such as pressure, flow, temperature, level, and other parameters, in combination with, for example, control devices, such as valves, pumps and motors, to control the flow of materials during their processing.

**In** some embodiments, the temperature transmitter 100 includes a temperature sensing unit 104 that is configured to sense a temperature of the process medium 102 and output a measured temperature signal, generally referred to as 106, that is indicative of the temperature of the process medium 102. In some embodiments, the unit 104 includes one or more temperature sensors, generally referred to as 105, that are used to measure a temperature of the process medium 102. The one or more temperature sensors 105 may take on any suitable form. For example, the sensors 105 may each include a thermocouple, a resistive temperature detector, a thermistor, and/or another suitable temperature sensing device.

In some embodiments, the unit 104 includes at least one process temperature sensor 105A (hereinafter "temperature sensor 105A") that is separated from the process medium 102 by an isolation wall 108 that engages the process medium 102 and isolates the sensor 105A from the process medium 102. As discussed below, the isolation wall 108 is a wall of a process vessel (e.g., a pipe, a tank, etc.) containing the process medium 102, for example. In some examples not forming part of the invention, the isolation wall 108 is a sheath or wall of the temperature sensor 105A or other housing. The sensor 105A is configured to produce a temperature signal 106A that is a function of the temperature of the process medium 102 that is communicated through the wall 108. In some examples not forming part of the invention, the temperature signal 106 is produced by the unit 104 using only the temperature signal 106A produced by the one or more process temperature sensors 105A, such as when the temperature transmitter 100 uses a thermowell, as discussed below.

In some embodiments, temperature sensing unit 104 includes one or more secondary temperature sensors 105B (hereinafter "secondary temperature sensor 105B") and a processing circuit 110, which are illustrated in phantom lines. The processing circuit 110 may comprise analog circuitry and/or digital circuitry. In some embodiments, the processing circuit 110 represents one or more processors that are configured to execute instructions, which may be stored locally in memory of the processing circuit 110, or in memory that is remote to the transmitter 100, to perform one or more functions described herein.

The temperature sensor 105B is configured to output a temperature signal 106B that is processed along with the temperature signal 106A by the processing circuit 110 to estimate the temperature of the process medium 102. In some examples not forming part of the invention, the temperature signal 106B may be indicative of the ambient conditions to which the isolation wall 108 and/or another component of the transmitter 100 is exposed. According to the invention, the processing circuit 110 processes the temperature signals 106A and 106B to produce the temperature signal 106 representing the temperature measured by the unit 104. Typically, the secondary temperature sensor 105B and the processing circuit 110 are used with non-intrusive temperature transmitters 100, as discussed below.

**In** some embodiments, the transmitter 100 is an analog device, in which the temperature signals 106, 106A, and/or 106B (if present) are analog signals. In some embodiments, the temperature transmitter 100 includes one or more analog-to-digital converters (ADC) 112 that digitizes the analog temperature signals into a digital temperature signal (e.g., 106', 106A', 106B') for processing by circuitry of the transmitter in the digital domain, as illustrated in FIG. 1. In some embodiments, separate ADC's 112 are used, as shown in FIG. 1. In some embodiments, a single ADC 112 may be used with the input signals (e.g., 106A and 106B) multiplexed into it.

The communication of the temperature of the process medium 102 through the isolation wall 108 delays the communication of a temperature change in the medium 102 to the temperature sensor 105A. As a result, a period of time must elapse before the temperature change of the medium 102 is measured by the sensor 105A and the measured temperature represented by the temperature signal 106 indicates the temperature change. This delay in the temperature measurement corresponds to a response time of the temperature measurement, which may be dependent on one or more variables, such as the material forming the isolation wall 108, the thickness of the isolation wall 108, the mass of the isolation wall 108, the thermal conductivity of the isolation wall 108, an ambient temperature to which the isolation wall 108 is exposed, and/or other variables.

Effects of the delay in the temperature measurement of the process medium 102 include a limit on the measurement bandwidth. Specifically, the delay acts as a low-pass filter whose cutoff frequency drops in response to an increase in the delay or a decrease in the response time. As a result, changes in the temperature of the process medium 102 occurring at a frequency that is above the cutoff frequency are rendered undetectable by the temperature sensing unit 104. Embodiments of the present disclosure operate to reduce or eliminate the temperature measurement delay by reducing the "perceived" response time of the temperature measurement or by reducing the impact of the response time of the temperature measurement, thereby decreasing the cutoff frequency and the loss of potentially valuable information.

According to the invention, the temperature transmitter 100 includes a compensation circuit 120 that is configured to process the temperature signal 106 output by the temperature sensing unit 104 to compensate the temperature signal 106 or the temperature measurement indicated by the temperature signal 106 for the response time of the temperature measurement, and output a compensated temperature signal 122 that more accurately represents the current temperature of the process medium 102. Thus, in some examples not forming part of the invention, the compensation circuit 120 compensates the temperature signal 106 that is produced based on the temperature signal 106A output from the process temperature sensor 105A. According to the invention, the compensation circuit 120 compensates the temperature signal 106 output by the processing circuit 110, which is based on the temperature signal 106A output from the temperature sensor 105A and the temperature signal 106B output from the temperature sensor 105B.

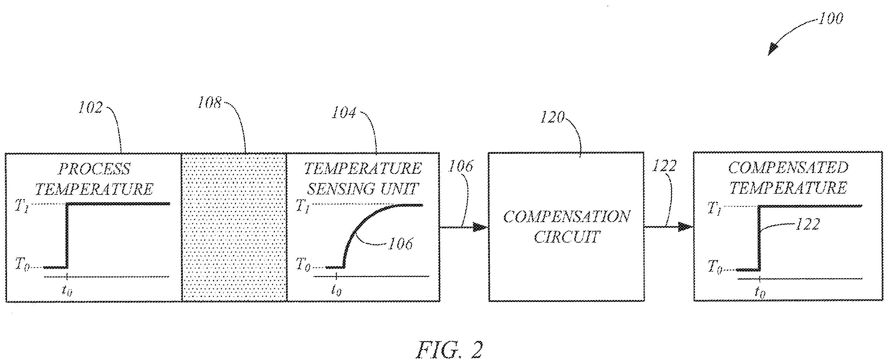

FIG. 2 is a simplified block diagram illustrating exemplary signal processing performed by the compensation circuit 120. For example, when a step temperature change to the process medium 102 occurs at time $t_0$, such as an increase from temp $T_0$ to temp $T_1$, as indicated in the chart within the box representing the process medium 102, a delay occurs before the temperature change is measured by the temperature sensing unit 104. This delay is indicated in the chart representing the temperature measurement indicated by the signal 106 that is presented in the box representing the temperature sensing unit 104. The response time of the temperature measurement causing the delay between the temperature indicated by the temperature signal 106 and the actual temperature of the process medium 102 is due, at least in part, to the necessity to communicate the temperature change through the isolation wall 108. Other factors may also contribute to the slow response time of the temperature measurement. The compensation circuit 120 compensates the signal 106 to substantially eliminate or reduce the response time of the temperature measurement, such that the compensated temperature signal 122 substantially matches the actual temperature of the process medium, as indicated in the box representing the compensated temperature signal 122.

The compensation circuit 120 may comprise analog circuitry and/or digital circuitry. In some embodiments, the compensation circuit 120 represents one or more processors that are configured to execute instructions, which may be stored locally in memory of the compensation circuit 120, or in memory that is remote to the transmitter 100, to perform one or more functions described herein. In some embodiments, the compensated temperature signal 122 is a digital signal, and the temperature transmitter 100 includes a digital-to-analog converter (DAC) 124 that converts the compensated temperature signal 122 to an analog compensated temperature signal 122'.

According to the invention, the temperature transmitter 100 includes an output circuit 126 that receives the compensated temperature signal 122 and produces a temperature output 128 as a function of the compensated temperature signal 122. In some embodiments, the output circuit 126 produces the temperature output 128 in accordance with a desired data communication protocol.

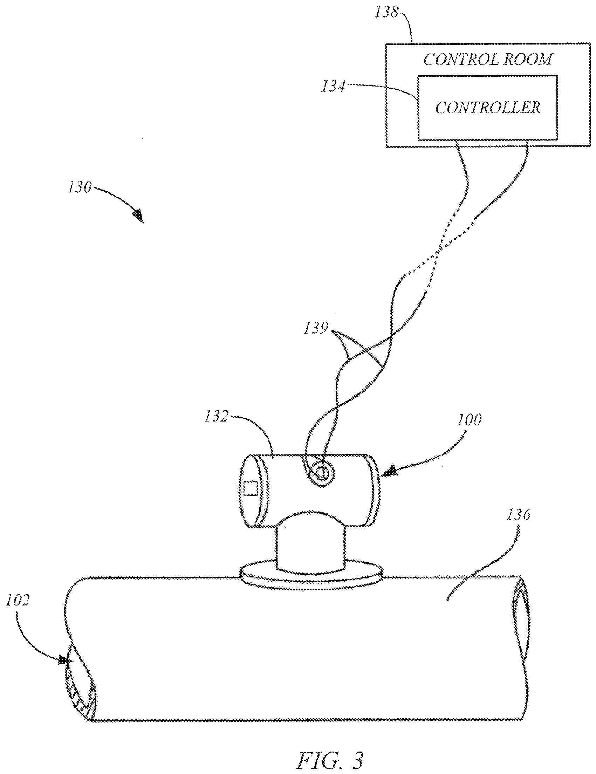

FIG. 3 is a simplified diagram showing an exemplary industrial process control system 130 including the temperature transmitter 100 formed in accordance with one or more embodiments described herein. According to the invention, the transmitter 100 includes a housing 132 that may contain, for example, the compensation circuit 120, the output circuit 126, and/or other components of the transmitter described herein. In some embodiments, the output circuit 126 is configured to transmit the temperature output 128 to a suitable controller 134 that uses the temperature output 128 to control aspects of the process medium 102, such as a process fluid flowing through a process vessel 136, such as a pipe. In some embodiments, the controller 134 is located remotely from the temperature transmitter 100, such as in a remote control room 138, as shown in FIG. 3.

In some embodiments, the output circuit 126 is connected to the controller 134 over a two-wire loop 139, as illustrated in FIG. 3. In some embodiments, the two-wire loop 139 is configured to transmit all electrical power required by the temperature transmitter 100 to operate. In some embodiments, the output circuit 126 communicates the temperature output 128 over the two-wire loop 139 to the controller 134 by modulating a current flow that varies between 4-20 milliamps. Alternatively, the output circuit 126 may be configured to transmit the temperature output 128 to the controller 134 wirelessly in a point-to-point configuration, a mesh network, or other suitable configuration with the temperature transmitter 100 having its own power source.

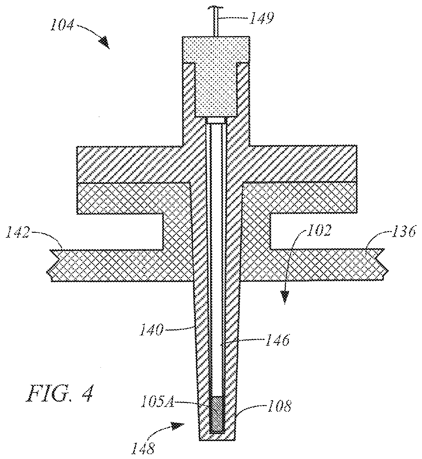

FIG. 4 is simplified cross-sectional view of a portion of a temperature sensing unit 104 within a thermowell 140 of a temperature transmitter 100, which is not forming part of the invention. The thermowell 140 includes the isolation wall 108 and encloses the temperature sensor 105A. When the transmitter 100 is installed in the field, the thermowell 140 extends through a wall 142 of a process vessel 136, such as a process pipe (shown), a tank, or other process vessel, to position the thermowell 140 within the process medium 102. In some embodiments, the temperature sensor 105A is located at a distal end of a sensor probe 146, which positions the temperature sensor 105A within a temperature sensing region 148 of the thermowell 140. One exemplary thermowell of a temperature transmitter is disclosed in U.S. Patent No. 9,188,490.

The isolation wall 108 of the thermowell 140 isolates the temperature sensor 104 from the process medium 102. In some examples not forming part of the invention, the isolation wall 108 is a cylindrical or conical wall that surrounds the temperature sensor 105A. In some examples, the isolation wall 108 is formed of a highly thermally conductive material, such as brass, steel, copper, or other suitably thermally conductive material. Such materials reduce the time required to communicate (i.e., conduct) the temperature of the medium 102 to the sensor 105A. The temperature signal 108 (FIG. 1) output by the temperature sensor 104 may be communicated to other components of the transmitter 100, such as the compensation circuit 110 through wires 149, for example.

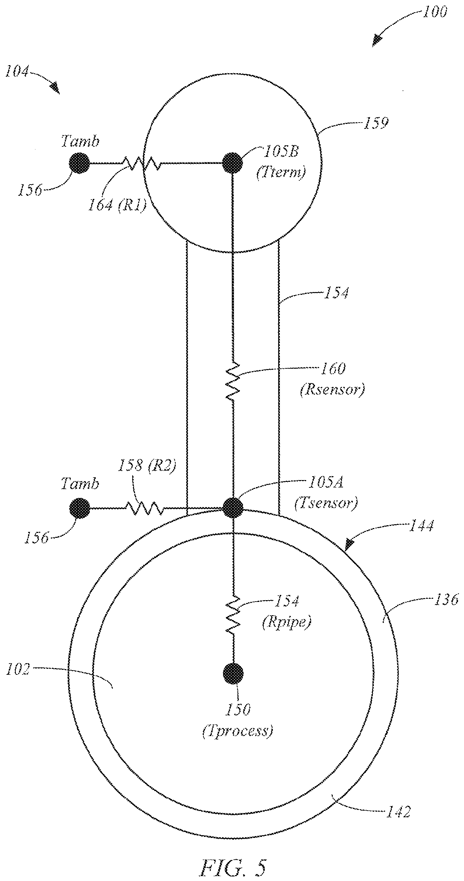

FIG. 5 is a diagrammatic view of a temperature sensing unit 104 of an exemplary non-intrusive temperature transmitter 100 that is located externally to the process vessel 136 (e.g., pipe, tank, etc.), in accordance with embodiments of the present disclosure. Another exemplary non-intrusive temperature transmitter is disclosed in U.S. Publication No. 2015/0185085.

According to the invention, the wall 142 of the process vessel 136 forms the isolation wall 108 that separates the process medium 102 from the temperature sensor 105A (Tsensor), which is placed in contact with or in close proximity to the exterior surface 144 of the wall 142, as shown in FIG. 5. The process temperature sensor 105A performs a temperature measurement of the process medium 102 through the wall 142, which is illustrated as a pipe in FIG. 5, by measuring a temperature at the exterior surface 144.

Heat flow is modeled in FIG. 5 in terms of electrical components. Specifically, the temperature of the process fluid is illustrated as node 150 and is coupled to the temperature sensor 105A via the thermal impedance (Rpipe) of the pipe 136 or wall 142 indicated diagrammatically as a resistor 154. It should be noted that the thermal impedance of the pipe 136 or wall 142 can be known either by virtue of the material of the pipe 136 itself and the thickness of the pipe wall 142 such that a suitable impedance parameter could be entered into circuitry of the unit 104, such as the compensation circuit 120. For example, a user configuring the system may indicate that the pipe 136 is constructed from stainless steel and the wall 142 is 1.27 cm (1/2 inch) thick. Then, suitable lookup data within memory can be accessed by the compensation circuit 120 to identify a corresponding thermal impedance that matches the selected material and wall thickness. Moreover, embodiments may be practiced where the pipe material is simply selected and the thermal impedance can be calculated based on the selected material and the selected wall thickness. Regardless, embodiments of the present disclosure generally leverage knowledge of the thermal impedance of the pipe material. Further, in embodiments where the thermal impedance of the pipe material cannot be known ahead of time, it is also possible that a calibration operation can be provided where a known process fluid temperature is provided to the non-invasive process fluid temperature calculation system and the thermal impedance is set as a calibration parameter.

As indicated in FIG. 5, heat may also flow from the temperature sensor 105A out the sidewall of stem portion 154 to the ambient environment illustrated at reference numeral 156. This is illustrated diagrammatically as thermal impedance (R2) at reference number 158. The thermal impedance (R2) to the ambient environment can be increased by thermally insulating the temperature sensor 105A.

Heat also flows from the external surface 144 of the pipe 136 through the stem portion 154 to a housing 159 or other location that is spaced from the pipe 136 via conduction through stem portion 154. The housing 159 encloses circuitry of the temperature sensing unit 104, such as the compensation circuit 120 and the output circuit 126, for example. The thermal impedance of the stem portion 154 (Rsensor) is illustrated diagrammatically at reference numeral 160. In some embodiments, the temperature sensing unit 104 includes a temperature sensor 105B (Tterm) that is coupled to a terminal block or other location within the housing 159 to measure the terminal temperature. Heat may flow from the temperature sensor 105B to the ambient environment via thermal impedance 164 (R1).

When the process fluid temperature changes, it will affect both the reading from temperature sensor 105A and the reading from terminal temperature sensor 105B since there is a rigid mechanical interconnection between them (heat conduction through stem portion 154) with relatively high thermal conductance. The same applies to the ambient temperature. When the ambient temperature changes, it will impact both of these measurements as well, but to a much lesser extent.

For slow changing conditions, the basis heat flux calculation can be simplified into:

$$T_{corrected} = T_{sensor} + (T_{sensor} - T_{terminal}) * (R_{pipe} / R_{sensor}).$$

As mentioned above, embodiments of the compensation circuit 120 operate to compensate the corrected temperature (Tcorrected) indicated by the temperature signal 106 or 106', for the response time of the temperature measurement, such as the time required to communicate the temperature of the process medium 102 through the isolation wall 108 in form of the wall 142 of the pipe 136, as well as other materials, such as a sensor sheath or other material of the sensor 105A, for example. This can generally be approximated using the following first order equation, in which t is the update rate (e.g., 1 second or less) of the temperature measurement (Tcorrected), and $\tau$ is the time constant of the components involved in the temperature measurement.

$$Temp_{meas} = Temp_{process} * (1 - e^{-t/\tau}) \qquad \text{Eq. 1}$$

According to the invention, the compensation circuit 120 applies dynamic compensation to the temperature measurement by knowing the time constant and trend information about the temperature measurement. The rate of change of the measurement can be evaluated over a number of samples to provide a percentage and direction of correction that minimizes sampling noise. The rate of change can be divided by the exponential portion of Equation 1 to provide the dynamic compensation to the measured temperature, as indicated in Equation 2.

$$Temp_{dynamicComp} = \frac{Temp_{meas\_ROC}}{(1 - e^{-t/\tau})} \qquad \text{Eq. 2}$$

A compensated temperature measurement value ($Temp_{measCompensated}$), which is represented by the compensated temperature signal 122 (FIG. 1), is calculated by adding the measured temperature value ($Temp_{meas}$) corresponding to the signal 106 or 106' from the sensing unit 104 with the dynamic compensation value ($Temp_{dynamicComp}$), as indicated in Equation 3. The time delay described above between the measured temperature ($Temp_{meas}$) and the current temperature of the medium 102 is removed or significantly reduced in the compensated temperature measurement ($Temp_{measCompensated}$), as indicated by the signal 122 in FIG. 2.

$$Temp_{measCompensated} = Temp_{meas} + Temp_{dynamicComp} \qquad \text{Eq. 3}$$

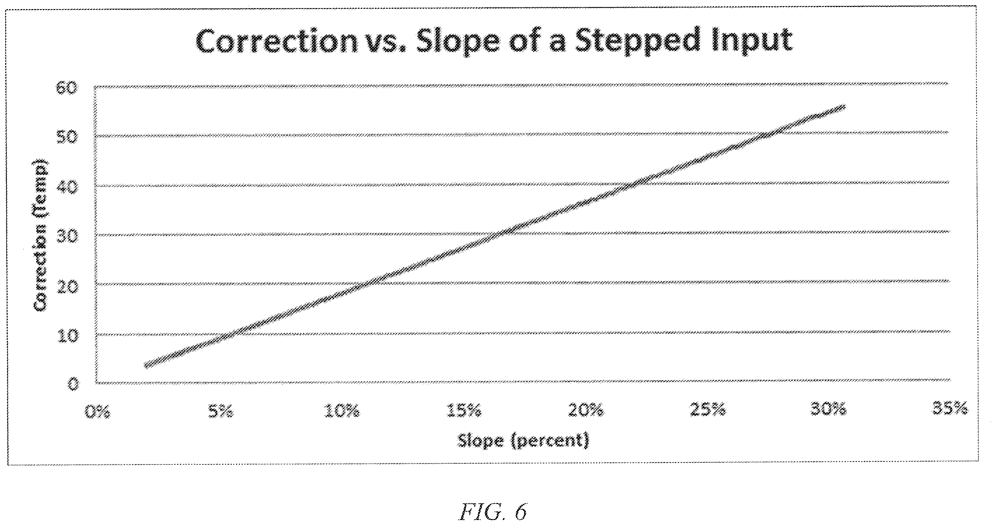

FIG. 6 is a graph illustrating the amount of correction that should be applied to a temperature measurement in relation to the measurement rate of change for a stepped input from 60°C to 120°C with a 3-minute time constant. As shown in FIG. 6, as the trending change in the temperature measurement is smaller, so is the necessary correction ($Temp_{dynamicComp}$).

For non-intrusive temperature transmitters 100, such as that discussed above with reference to FIG. 5, parameters of the process vessel wall 142, which forms the isolation wall 108, must be known, such as the material forming the wall 142, thickness of the wall 142, and/or other parameters of the process vessel wall 142. These can be set in the transmitter 100. In some embodiments, such parameters of the process vessel wall 142 are used to determine the time constant for the specific process vessel wall 142, through which the transmitter 100 is measuring the temperature of the process medium 102. Testing has shown that the time constant for each supported pipe material can be approximated using a linear equation for any pipe wall thickness. For example, the time constant in minutes for carbon steel can be calculated using Equation 4 below.

$$\tau_{cs} = 8.042 * Wall_{thickness} + 1.031 \qquad \text{Eq. 4}$$

Time constants for transmitters 100 utilizing a thermowell, such as the thermowell 140 described above with reference to FIG. 4, can be calculated in a similar manner to determine the amount of correction ($Temp_{dynamicComp}$) of the measured temperature ($Temp_{meas}$) that is required.

Adjustments to calculated time constants can be made if additional information is supplied, such as the type of process medium contained within the process vessel 136, the density of the process medium 102, and/or other information.

It is understood that embodiments of the present disclosure may be applied to compensate for delays in the response time of other types of temperature sensors. For example, the response time of a resistance temperature detector (RTD) used for cold junction compensation of a thermocouple may be compensated for using the techniques described above, such as when the ambient temperature changes quickly. Furthermore, as RTD's have slower response times than thermocouples, embodiments of the present disclosure may be used to speed up measurements performed by an RTD having an isolation wall in the form of an exterior wall of the RTD, for example.

In some embodiments, parameter values, such as time constants, wall thicknesses, and/or other information used by the compensation circuit 120, may be stored in memory that is accessible by the compensation circuit 120. In some embodiments, the parameter values are stored in one or more radio frequency identification (RFID's) tags. In some embodiments, such RFID tags are attached to the temperature sensor being compensated, the isolation wall (e.g., thermowell or process vessel), or other component.

**Claims**

1. An industrial process temperature transmitter (100) for measuring a temperature of a process medium (102) contained in a process vessel (136) comprising an isolation wall (108), the industrial process temperature transmitter (100) comprising:

a thermally conductive stem portion (154) having a first end, configured to be brought into contact with or in close proximity to the isolation wall (108), and a second end; and

a housing (159) attached to the second end of the stem portion (154);

a process temperature sensor (105A) configured to perform a temperature measurement of the process medium (102) through the isolation wall (108);

a secondary temperature sensor (105B) configured to produce a secondary temperature signal (106B) based on a sensed temperature, wherein the secondary temperature sensor (105B) is within the housing (159);

wherein the industrial process temperature transmitter (100) is configured to produce a temperature signal (106') that is indicative of the temperature of the process medium (102) in the process vessel (136), based on a process temperature signal (106A) output from the process temperature sensor (105A) and the secondary temperature signal (106B) during a temperature measurement;

a compensation circuit (120) configured to provide a dynamic compensation to the temperature signal (106') for a response time of the temperature measurement to a change in the temperature of the process medium (102) and a rate of change of the temperature measurement, and output a compensated temperature signal (122, 122');

an output circuit (126) configured to produce a temperature output (128) as a function of the compensated temperature signal (122, 122').

2. The transmitter according to claim 1, wherein:

the response time of the temperature measurement is dependent on at least one property of the isolation wall (108) selected from the group consisting of a mass of the isolation wall (108), a thermal conductivity of the isolation wall (108), and a thickness of the isolation wall (108); and

the compensation circuit (120) compensates the temperature signal (106') and outputs the compensated temperature signal (122, 122') based on the at least one property of the isolation wall (108).

3. The transmitter according to claim 1, wherein:

the isolation wall (108) forms a wall of the process vessel (136);

the process temperature sensor (105A) is configured to be brought into thermal contact with an exterior surface (144) of the isolation wall (108); and

the secondary temperature sensor (105B) is configured to be brought into thermal contact with an exterior surface (144) of the isolation wall (108) via the thermally conductive stem portion (154).

4. The transmitter according to claim 3, wherein the process vessel (136) is selected from the group consisting of a pipe (136) and a tank, or wherein the secondary temperature sensor (105B) measures a terminal block temperature of the transmitter (100) contained within the housing (159).

5. The transmitter according to claim 3, wherein:

the industrial process temperature transmitter (100) includes at least one analog-to-digital converter (112) configured to convert the process temperature signal (106A) in an analog form into a digital process temperature signal (106A') and to convert the secondary temperature signal (106B) in an analog form into a digital secondary temperature signal (106B');

a processing circuit (110) produces the temperature signal (106') in a digital form based on the digital process temperature signal (106A') and the digital secondary temperature signal (106B'); and

a digital-to-analog converter (124) configured to convert the compensated temperature signal (122) in a digital form to an analog compensated temperature signal (122');

wherein the output circuit (126) is configured to produce the temperature output (128) as a function of the analog compensated temperature signal (122').

6. The transmitter according to claim 1, wherein:

the industrial process temperature transmitter (100) includes an analog-to-digital converter (112) configured to convert the process temperature signal (106A) in an analog form into a digital process temperature signal (106A') to produce the temperature signal (106') in a digital form; and

a digital-to-analog converter (124) configured to convert the compensated temperature signal (122) in a digital form to an analog compensated temperature signal (122');

wherein the output circuit (126) is configured to produce the temperature output (128) as a function of the analog compensated temperature signal (122').

7. The transmitter according to claim 1, wherein:

the response time of the temperature measurement is dependent on at least one property of the isolation wall (108) selected from the group consisting of a mass of the isolation wall (108), a thermal conductivity of the isolation wall (108), and a thickness of the isolation wall (108); and
the compensation circuit (120) is configured to compensate the temperature signal (106') and to produce the compensated temperature signal (122, 122') based on the at least one property of the isolation wall (108).

8. The transmitter according to claim 7, wherein the process vessel (136) is selected from the group consisting of a pipe (136) and a tank, or wherein the compensation circuit (120) is configured to compensate the temperature signal (106') for the response time of the temperature measurement based on a thermal impedance of the stem portion (154).

9. The transmitter according to claim 7, wherein:

the industrial process temperature transmitter (100) includes a first analog-to-digital converter (112) configured to convert the process temperature signal (106A) in an analog form into a digital process temperature signal (106A'), and a second analog-to-digital converter (112) configured to convert the secondary temperature signal (106B) in an analog form into a digital secondary temperature signal (106B');
the processing circuit (110) produces the temperature signal (106') in a digital form based on the digital process temperature signal (106A') and the digital secondary temperature signal (106B'); and
a digital-to-analog converter (124) configured to convert the compensated temperature signal (122) in a digital form to an analog compensated temperature signal (122');
wherein the output circuit (126) is configured to produce the temperature output (128) as a function of the analog compensated temperature signal (122').

10. A method for measuring a temperature of a process medium (102) contained in a process vessel (136) using an industrial process temperature transmitter (100) comprising a housing (159), the method comprising:

performing a temperature measurement of the temperature of a process medium (102) using the industrial process temperature transmitter (100) including:
sensing the temperature of the process medium (102) through an isolation wall (108) of the process vessel (136) using a process temperature sensor (105A) comprising a thermistor; and
sensing a temperature of a terminal block or other location within the housing (159) which is thermally connected with the process medium (102) and spaced to the process medium (102) by means of a thermally conductive stem portion (154) using a secondary temperature sensor (105B);
producing a temperature signal (106') in response to the temperature measurement comprising processing a temperature signal (106A) from the process temperature sensor (105A) and a secondary temperature signal (106B) from the secondary temperature sensor (105B);
dynamically compensating the temperature signal (106') for a response time of the temperature measurement and a rate of change of the temperature measurement using a compensation circuit (120);
generating a compensated temperature signal (122, 122'), in which the response time of the temperature measurement is reduced or eliminated, using the compensation circuit (120); and
producing a temperature output (128) as a function of the compensated temperature signal (122, 122') using an output circuit (126).

11. The method according to claim 10, wherein compensating the temperature signal (106') comprises compensating the temperature signal (106') based on at least one property of the isolation wall (108) selected from the group consisting of a mass of the isolation wall (108), a thermal conductivity of the isolation wall (108), and a thickness of the isolation wall (108).

12. The method according to claim 10, wherein:
performing a temperature measurement comprises contacting an exterior surface (144) of the isolation wall (108) with the process temperature sensor (105A).

**Patentansprüche**

1. Temperatursender (100) für industrielle Prozesse zum Messen einer Temperatur eines Prozessmediums (102), das in einem Prozessbehälter (136) enthalten ist, der eine Isolationswand (108) umfasst, wobei der Temperatursender (100) für industrielle Prozesse umfasst:

   einen wärmeleitfähigen Schaftabschnitt (154), der ein erstes Ende aufweist, das dazu eingerichtet ist, in Kontakt mit der, oder in unmittelbare Nähe zu der, Isolationswand (108) gebracht zu werden, und ein zweites Ende aufweist; und
   ein Gehäuse (159), das an dem zweiten Ende des Schaftabschnitts (154) angebracht ist;
   einen Prozesstemperatursensor (105A), der dazu eingerichtet ist, eine Temperaturmessung des Prozessmediums (102) durch die Isolationswand (108) hindurch durchzuführen;
   einen sekundären Temperatursensor (105B), der dazu eingerichtet ist, ein sekundäres Temperatursignal (106B) auf der Grundlage einer abgefühlten Temperatur zu erzeugen, wobei sich der sekundäre Temperatursensor (105B) innerhalb des Gehäuses (159) befindet;
   wobei der Temperatursender (100) für industrielle Prozesse dazu eingerichtet ist, ein Temperatursignal (106'), das die Temperatur des Prozessmediums (102) in dem Prozessbehälter (136) angibt, auf der Grundlage eines von dem Prozesstemperatursensor (105A) ausgegebenen Prozesstemperatursignal (106A) und des sekundären Temperatursignals (106B) während einer Temperaturmessung zu erzeugen;
   eine Kompensationsschaltung (120), die dazu eingerichtet ist, das Temperatursignal (106') um eine Ansprechzeit der Temperaturmessung auf eine Änderung der Temperatur des Prozessmediums (102) und eine Änderungsrate der Temperaturmessung dynamisch zu kompensieren und ein kompensiertes Temperatursignal (122, 122') auszugeben;
   eine Ausgabeschaltung (126), die dazu eingerichtet ist, eine Temperaturausgabe (128) als eine Funktion des kompensierten Temperatursignals (122, 122') zu erzeugen.

2. Sender nach Anspruch 1, wobei:

   die Ansprechzeit der Temperaturmessung von mindestens einer Eigenschaft der Isolationswand (108) abhängig ist, die ausgewählt ist aus der Gruppe bestehend aus einer Masse der Isolationswand (108), einer Wärmeleitfähigkeit der Isolationswand (108), und einer Dicke der Isolationswand (108); und
   die Kompensationsschaltung (120) das Temperatursignal (106') auf der Grundlage der mindestens einen Eigenschaft der Isolationswand (108) kompensiert und das kompensierte Temperatursignal (122, 122') ausgibt.

3. Sender nach Anspruch 1, wobei:

   die Isolationswand (108) eine Wand des Prozessbehälters (136) bildet;
   der Prozesstemperatursensor (105A) dazu eingerichtet ist, in thermischen Kontakt mit einer Außenfläche (144) der Isolationswand (108) gebracht zu werden; und
   der sekundäre Temperatursensor (105B) dazu eingerichtet ist, über den wärmeleitfähigen Schaftabschnitt (154) in thermischen Kontakt mit einer Außenfläche (144) der Isolationswand (108) gebracht zu werden.

4. Sender nach Anspruch 3, wobei der Prozessbehälter (136) ausgewählt ist aus der Gruppe bestehend aus einem Rohr (136) und einem Tank, oder wobei der sekundäre Temperatursensor (105B) eine Anschlussblocktemperatur des innerhalb des Gehäuses (159) befindlichen Senders (100) misst.

5. Sender nach Anspruch 3, wobei:

   der Temperatursender (100) für industrielle Prozesse mindestens einen Analog-Digital-Wandler (112) aufweist, der dazu eingerichtet ist, das Prozesstemperatursignal (106A) in einer analogen Form in ein digitales Prozesstemperatursignal (106A') umzuwandeln und das sekundäre Temperatursignal (106B) in einer analogen Form in ein digitales sekundäres Temperatursignal (106B') umzuwandeln;
   eine Verarbeitungsschaltung (110) das Temperatursignal (106') in einer digitalen Form auf der Grundlage des digitalen Prozesstemperatursignals (106A') und des digitalen sekundären Temperatursignals (106B') erzeugt;
   ein Digital-Analog-Wandler (124) dazu eingerichtet ist, das kompensierte Temperatursignal (122) in einer digitalen Form in ein analoges kompensiertes Temperatursignal (122') umzuwandeln;
   wobei die Ausgabeschaltung (126) dazu eingerichtet ist, die Temperaturausgabe (128) als eine Funktion des analogen kompensierten Temperatursignals (122') zu erzeugen.

6. Sender nach Anspruch 1, wobei:

der Temperatursender (100) für industrielle Prozesse einen Analog-Digital-Wandler (112) aufweist, der dazu eingerichtet ist, das Prozesstemperatursignal (106A) in einer analogen Form in ein digitales Prozesstemperatursignal (106A') umzuwandeln, um das Temperatursignal (106') in einer digitalen Form zu erzeugen; und ein Digital-Analog-Wandler (124) dazu eingerichtet ist, das kompensierte Temperatursignal (122) in einer digitalen Form in ein analoges kompensiertes Temperatursignal (122') umzuwandeln; wobei die Ausgabeschaltung (126) dazu eingerichtet ist, die Temperaturausgabe (128) als eine Funktion des analogen kompensierten Temperatursignals (122') zu erzeugen.

7. Sender nach Anspruch 1, wobei:

die Ansprechzeit der Temperaturmessung von mindestens einer Eigenschaft der Isolationswand (108) abhängig ist, die ausgewählt ist aus der Gruppe bestehend aus einer Masse der Isolationswand (108), einer Wärmeleitfähigkeit der Isolationswand (108), und einer Dicke der Isolationswand (108); und die Kompensationsschaltung (120) dazu eingerichtet ist, das Temperatursignal (106') zu kompensieren und das kompensierte Temperatursignal (122, 122') auf der Grundlage der mindestens einen Eigenschaft der Isolationswand (108) zu erzeugen.

8. Sender nach Anspruch 7, wobei der Prozessbehälter (136) ausgewählt ist aus der Gruppe bestehend aus einem Rohr (136) und einem Tank, oder wobei die Kompensationsschaltung (120) dazu eingerichtet ist, das Temperatursignal (106') um die Ansprechzeit der Temperaturmessung auf der Grundlage einer thermischen Impedanz des Schaftabschnitts (154) zu kompensieren.

9. Sender nach Anspruch 7, wobei:

der Temperatursender (100) für industrielle Prozesse einen ersten Analog-Digital-Wandler (112) aufweist, der dazu eingerichtet ist, das Prozesstemperatursignal (106A) in einer analogen Form in ein digitales Prozesstemperatursignal (106A') umzuwandeln, und einen zweiten Analog-Digital-Wandler (112) aufweist, der dazu eingerichtet ist, das sekundäre Temperatursignal (106B) in einer analogen Form in ein digitales sekundäre Temperatursignal (106B') umzuwandeln; die Verarbeitungsschaltung (110) das Temperatursignal (106') in einer digitalen Form auf der Grundlage des digitalen Prozesstemperatursignals (106A') und des digitalen sekundären Temperatursignals (106B') erzeugt; und ein Digital-Analog-Wandler (124) dazu eingerichtet ist, das kompensierte Temperatursignal (122) in einer digitalen Form in ein analoges kompensiertes Temperatursignal (122') umzuwandeln; wobei die Ausgabeschaltung (126) dazu eingerichtet ist, die Temperaturausgabe (128) als eine Funktion des analogen kompensierten Temperatursignals (122') zu erzeugen.

10. Verfahren zum Messen einer Temperatur eines Prozessmediums (102), das in einem Prozessbehälter (136) enthalten ist, unter Verwendung eines Temperatursenders (100) für industrielle Prozesse, der ein Gehäuse (159) umfasst, wobei das Verfahren umfasst:
Durchführen einer Temperaturmessung der Temperatur eines Prozessmediums (102) unter Verwendung des Temperatursenders (100) für industrielle Prozesse, was umfasst:

Abfühlen der Temperatur des Prozessmediums (102) durch eine Isolationswand (108) des Prozessbehälters (136) unter Verwendung eines Prozesstemperatursensors (105A), der einen Thermistor umfasst; Erfassen einer Temperatur eines Anschlussblocks oder einer anderen Stelle innerhalb des Gehäuses (159), die thermisch mit dem Prozessmedium (102) verbunden und mittels eines wärmeleitfähigen Schaftabschnitts (154) von dem Prozessmedium (102) beabstandet ist, unter Verwendung eines sekundären Temperatursensors (105B); Erzeugen eines Temperatursignals (106') in Reaktion auf die Temperaturmessung, umfassend das Verarbeiten eines Temperatursignals (106A) von dem Prozesstemperatursensor (105A) und eines sekundären Temperatursignals (106B) von dem sekundären Temperatursensor (105B); dynamisches Kompensieren des Temperatursignals (106') um eine Ansprechzeit der Temperaturmessung und eine Änderungsrate der Temperaturmessung unter Verwendung einer Kompensationsschaltung (120); Erzeugen eines kompensierten Temperatursignals (122, 122'), in dem die Ansprechzeit der Temperaturmessung reduziert oder eliminiert ist, unter Verwendung der Kompensationsschaltung (120); und

Erzeugen einer Temperaturausgabe (128) als eine Funktion des kompensierten Temperatursignals (122, 122') unter Verwendung einer Ausgabeschaltung (126).

11. Verfahren nach Anspruch 10, wobei das Kompensieren des Temperatursignals (106') das Kompensieren des Temperatursignals (106') auf der Grundlage mindestens einer Eigenschaft der Isolationswand umfasst, die ausgewählt ist aus der Gruppe bestehend aus einer Masse der Isolationswand (108), einer Wärmeleitfähigkeit der Isolationswand (108), und einer Dicke der Isolationswand (108).

12. Verfahren nach Anspruch 10, wobei:

das Durchführen einer Temperaturmessung das Inkontaktbringen einer Außenfläche (144) der Isolationswand (108) mit dem Prozesstemperatursensor (105A) umfasst.

**Revendications**

1. Transmetteur de température de procédé industriel (100) permettant de mesurer la température d'un fluide de procédé (102) contenu dans une cuve de procédé (136) comprenant une paroi d'isolation (108), le transmetteur de température de procédé industriel (100) comprenant :

une partie de tige thermoconductrice (154) possédant une première extrémité, conçue pour être mise en contact avec ou à proximité immédiate de la paroi d'isolation (108), et une seconde extrémité ; et
un boîtier (159) fixé à la seconde extrémité de la partie de tige (154) ;
un capteur de température de procédé (105A) conçu pour effectuer une mesure de température du fluide de procédé (102) à travers la paroi d'isolation (108) ;
un capteur de température secondaire (105B) conçu pour produire un signal de température secondaire (106B) basé sur une température détectée, dans lequel le capteur de température secondaire (105B) est situé à l'intérieur du boîtier (159) ;
dans lequel le transmetteur de température de procédé industriel (100) est conçu pour produire un signal de température (106') qui indique la température du fluide de procédé (102) dans la cuve de procédé (136), sur la base d'un signal de température de procédé (106A) délivré par le capteur de température de procédé (105A) et du signal de température secondaire (106B) lors d'une mesure de température ;
un circuit de compensation (120) conçu pour fournir une compensation dynamique au signal de température (106') pour un temps de réponse de la mesure de température à un changement de température du fluide de procédé (102) et un taux de variation de la mesure de température, et délivrer un signal de température compensé (122, 122') ;
un circuit de sortie (126) conçu pour produire une sortie de température (128) en fonction du signal de température compensé (122, 122').

2. Transmetteur selon la revendication 1, dans lequel :

le temps de réponse de la mesure de température dépend d'au moins une propriété de la paroi d'isolation (108) choisie dans le groupe constitué par une masse de la paroi d'isolation (108), une conductivité thermique de la paroi d'isolation (108), et une épaisseur de la paroi d'isolation (108) ; et
le circuit de compensation (120) compense le signal de température (106') et délivre le signal de température compensé (122, 122') sur la base de l'au moins une propriété de la paroi d'isolation (108).

3. Transmetteur selon la revendication 1, dans lequel :

la paroi d'isolation (108) forme une paroi de la cuve de procédé (136) ;
le capteur de température de procédé (105A) est conçu pour être mis en contact thermique avec une surface extérieure (144) de la paroi d'isolation (108) ; et
le capteur de température secondaire (105B) est conçu pour être mis en contact thermique avec une surface extérieure (144) de la paroi d'isolation (108) par l'intermédiaire de la partie de tige thermoconductrice (154).

4. Transmetteur selon la revendication 3, dans lequel la cuve de procédé (136) est choisie dans le groupe constitué par un tuyau (136) et un réservoir, ou dans lequel le capteur de température secondaire (105B) mesure une température de bloc terminal du transmetteur (100) contenu dans le boîtier (159).

**5.** Transmetteur selon la revendication 3, dans lequel :

le transmetteur de température de procédé industriel (100) comporte au moins un convertisseur analogique-numérique (112) conçu pour convertir le signal de température de procédé (106A) sous forme analogique en un signal de température de procédé numérique (106A') et pour convertir le signal de température secondaire (106B) sous forme analogique en un signal de température secondaire numérique (106B') ;
un circuit de traitement (110) produit le signal de température (106') sous forme numérique sur la base du signal de température de procédé numérique (106A') et du signal de température secondaire numérique (106B') ; et
un convertisseur numérique-analogique (124) conçu pour convertir le signal de température compensé (122) sous forme numérique en un signal de température compensé analogique (122') ;
dans lequel le circuit de sortie (126) est configuré pour produire la sortie de température (128) en fonction du signal de température compensé analogique (122').

**6.** Transmetteur selon la revendication 1, dans lequel :

le transmetteur de température de procédé industriel (100) comporte un convertisseur analogique-numérique (112) conçu pour convertir le signal de température de procédé (106A) sous forme analogique en un signal de température de procédé numérique (106A') pour produire le signal de température (106') sous forme numérique ; et
un convertisseur numérique-analogique (124) conçu pour convertir le signal de température compensé (122) sous forme numérique en un signal de température compensé analogique (122') ;
dans lequel le circuit de sortie (126) est configuré pour produire la sortie de température (128) en fonction du signal de température compensé analogique (122').

**7.** Transmetteur selon la revendication 1, dans lequel :

le temps de réponse de la mesure de température dépend d'au moins une propriété de la paroi d'isolation (108) choisie dans le groupe constitué par une masse de la paroi d'isolation (108), une conductivité thermique de la paroi d'isolation (108), et une épaisseur de la paroi d'isolation (108) ; et
le circuit de compensation (120) est conçu pour compenser le signal de température (106') et pour produire le signal de température compensé (122, 122') sur la base de l'au moins une propriété de la paroi d'isolation (108).

**8.** Transmetteur selon la revendication 7, dans lequel la cuve de procédé (136) est choisie dans le groupe constitué par un tuyau (136) et un réservoir, ou dans lequel le circuit de compensation (120) est conçu pour compenser le signal de température (106') pour le temps de réponse de la mesure de température sur la base d'une impédance thermique de la partie de tige (154).

**9.** Transmetteur selon la revendication 7, dans lequel :

le transmetteur de température de procédé industriel (100) comporte un premier convertisseur analogique-numérique (112) conçu pour convertir le signal de température de procédé (106A) sous forme analogique en un signal de température de procédé numérique (106A'), et un second convertisseur analogique-numérique (112) conçu pour convertir le signal de température secondaire (106B) sous forme analogique en un signal de température secondaire numérique (106B') ;
le circuit de traitement (110) produit le signal de température (106') sous forme numérique sur la base du signal de température de procédé numérique (106A') et du signal de température secondaire numérique (106B') ; et
un convertisseur numérique-analogique (124) conçu pour convertir le signal de température compensé (122) sous forme numérique en un signal de température compensé analogique (122') ;
dans lequel le circuit de sortie (126) est configuré pour produire la sortie de température (128) en fonction du signal de température compensé analogique (122').

**10.** Procédé de mesure d'une température d'un fluide de procédé (102) contenu dans une cuve de procédé (136) à l'aide d'un transmetteur de température de procédé industriel (100) comprenant un boîtier (159), le procédé comprenant :
l'effection d'une mesure de température de la température d'un fluide de procédé (102) à l'aide du transmetteur de température de procédé industriel (100), incluant :

la détection de la température du fluide de procédé (102) à travers une paroi d'isolation (108) de la cuve de procédé (136) à l'aide d'un capteur de température de procédé (105A) comprenant une thermistance ; et

la détection d'une température d'un bloc terminal ou d'un autre emplacement à l'intérieur du boîtier (159) qui est relié thermiquement au fluide de procédé (102) et espacé du fluide de procédé (102) au moyen d'une partie de tige thermoconductrice (154) à l'aide d'un capteur de température secondaire (105B) ;

la production d'un signal de température (106') en réponse à la mesure de température comprenant le traitement d'un signal de température (106A) provenant du capteur de température de procédé (105A) et d'un signal de température secondaire (106B) provenant du capteur de température secondaire (105B) ;

la compensation dynamique du signal de température (106') pour un temps de réponse de la mesure de température et un taux de variation de la mesure de température à l'aide d'un circuit de compensation (120) ;

la génération d'un signal de température compensé (122, 122'), dans lequel le temps de réponse de la mesure de température est réduit ou éliminé, à l'aide du circuit de compensation (120) ; et

la production d'une sortie de température (128) en fonction du signal de température compensé (122, 122') à l'aide d'un circuit de sortie (126).

11. Procédé selon la revendication 10, dans lequel la compensation du signal de température (106') comprend la compensation du signal de température (106') sur la base de l'au moins une propriété de la paroi d'isolation (108) choisie dans le groupe constitué par une masse de la paroi d'isolation (108), une conductivité thermique de la paroi d'isolation (108), et une épaisseur de la paroi d'isolation (108).

12. Procédé selon la revendication 10, dans lequel :
l'effection d'une mesure de température comprend la mise en contact d'une surface extérieure (144) de la paroi d'isolation (108) avec le capteur de température de procédé (105A).

FIG. 1

EP 3 586 095 B1

*FIG. 2*

*FIG. 3*

FIG. 4

FIG. 5

*FIG. 6*

EP 3 586 095 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102007055029 A1
- US 20160178446 A1
- US 9188490 B
- US 20150185085 A